# EUROPÄISCHE PATENTSCHRIFT

(11) **EP 0 508 083 B1**
(45) Veröffentlichungstag und Bekanntmachung des Hinweises auf die Patenterteilung: **28.06.1995**
(21) Anmeldenummer: 92103340.3
(22) Anmeldetag: 27.02.1992
(51) Int. Cl.: F16B 17/00, F16B 5/07

(54) **In Längsrichtung allseitig geschlossene, unlösbare, feste Profilverbindung**
Permanent, firm profile joint, longitudinally closed on all sides
Liaison de profilés indétachable. fixe et totalement fermée dans le sens de sa longeur

(30) Priorität: 08.04.1991 DE 4111243
(43) Veröffentlichungstag der Anmeldung: 14.10.1992
(73) Patentinhaber: Julius & August Erbslöh GmbH & Co., D-42553 Velbert-Neviges (DE)
(72) Erfinder: Pühringer, Siegfried, W-5600 Wuppertal 2 (DE)

(56) Entgegenhaltungen:
- EP-A- 0 268 884
- EP-A- 0 412 436
- CH-A- 402 518
- DE-A- 3 248 072
- DE-A- 3 423 967
- DE-A- 3 541 924
- FR-A- 2 545 022

## Beschreibung

Die Erfindung betrifft ein Profilelement zur Bildung einer in Längsrichtung allseitig geschlossenen, unlösbaren und festen Profilverbindung. Die Verbindung wird zwischen zwei leistenförmigen Profilelementen aus Metall, insbesondere aus Aluminium oder einer Aluminiumlegierung, geschlossen und dient zur Herstellung von flächigen Gegenständen wie beispielweise Tafeln, Platten, Gehäuseteilen und dergleichen.

Eine bekannte Verbindung für Profilelemente (DE 34 23 967) besteht aus zwei Profilteilen, bei der eine an einem Längsrand des einen Profilteils ausgebildete Feder in eine am anderen Längsrand ausgebildete Nut eingreift und die Lage der Profilelemente zueinander durch im Bereich der Längsränder angeordnete, einander hintergreifende Klemmflächen und -leisten verspannt. Auf der einen Seite der Profilelemente ist eine konvex nach außen gewölbte Stegleiste vorgesehen, die nach Zusammenfügen zweier Profilelemente durch Eingreifen in eine Winkelleiste den Verbund sichert. Nachteilig bei dieser Verbindung ist die notwendige sehr hohe Paßgenauigkeit der Profilelemente. Darüberhinaus ist es möglich, daß zu hohe Verformungskräfte zu einer auf der glatten Profilseite sichtbaren Durchbiegung führen.

Aus der DE 32 48 072 ist eine schubfeste Profilverbindung bekannt, die toleranzunempfindlich ist und eine hohe Genauigkeit der Lage der zu verbindenden Profilelemente zueinander gewährleistet, wobei vorgesehen ist, daß der eine Längsrand mit einem Verbindungselemt und parallel dazu in unmittelbarer Nähe mit einem Führungs- und Halteelement versehen ist und der zweite Längsrand ein entsprechendes Matrizenteil aufweist. Diese Profilverbindung besitzt den Nachteil, daß sie nur eine geschlossene, bündige, für die Herstellung von flächigen Gegenständen verwendbare Sichtfläche besitzt. Störend ist, daß die Unterseite Nuten aufweist, in denen sich nur schwer beseitigbare Schmutzteilchen ablagern können.

Die Aufgabe der vorliegenden Erfindung besteht darin, ausgehend von der aus der DE 32 48 072 bekannten Profilverbindung ein leistenförmiges Profilelement zur Bildung einer in Längsrichtung allseitig geschlossenen, unlösbaren, festen Profilverbindung zu schaffen. Die Verbindung soll ohne großen Arretierungsaufwand hergestellt werden können und nicht zu sichtbaren Durchbiegungen auf der glatten Oberfläche führen.

Diese Aufgabe wird gelöst durch ein Profilelement mit unterschiedlich ausgebildeten Längsrändern, wie in Anspruch 1 angegeben.
Das Klemmelement weist die Form eines V auf, dessen einer Steg dicker als der andere ist und dessen Scheitel über eine Dünnstelle unter einem spitzen Winkel an die Basis der Nut zwischen zwei Hakenleisten außermittig angeformt ist. Der genannte Winkel gewährleistet eine gute Verbindungsbildung ohne großen Arretierungsaufwand und ohne erhöhte Anforderungen an die Paßgenauigkeit der unterschiedlich ausgebildeten Längsränder.

Das Klemmelement überragt in Ausgangslage die beiderseits von ihm angeordneten Hakenleisten, vorzugsweise bis zur doppelten Höhe der Hakenleisten. Am anderen Längsrand ist ein weiteres Hakensystem ohne Klemmelement so angeordnet, daß die o. g. Hakenleisten bei Verbindungsbildung in entsprechend vorgesehene Nuten eingreifen können. Die Nuten am anderen Längsrand werden begrenzt durch Rastleiste und Anschlagwulst zum einen sowie zum anderen durch Hakenleiste und Stegleiste. Die zuerst genannte Nut dient der Aufnahme der Hakenleiste, die sich unmittelbar neben dem angeformten Klemmelement befindet. Die zweite Nut nimmt bei Verbindungsbildung die andere Hakenleiste des Profilelementes auf. Der Abstand dieser beiden Nuten entspricht dem Abstand der Hakenleisten am Profilelement. Eine glatte, bündige Oberfläche wird dadurch erreicht, daß das parallel verlaufende verlängerte Ende eines Längsrandes um das Maß der Höhe des anderen Längsrandes des Profilelementes abgekröpft ist.

Die beiden Profile werden zur Verbindungsbildung ineinander gelegt. Die Stegenden des Klemmelementes des Profilelementes werden zwischen Anschlagwulst und Hakenleiste des Gegenprofils plaziert. Durch Zusammendrücken, z. B. durch Rollen, verklemmen sich die beiden Profile. Aufgrund der Schräglage des Klemmelementes wird dieses über den Drehpunkt an der Dünnstelle quer zur Längsrichtung gegen die Basis des Profilelementes verschoben, wobei der dicke Steg sich an der Hakenleiste des Gegenprofils fest anlegt und bei zunehmendem Druck, ohne sich selbst zu verformen, das Hakensystem in die Verbindungslage drückt. Dabei wird der andere dünnere Steg durch Spreizung und Verformung arretiert. Auf der Vorderseite der Verbindung entsteht eine bündige, glatte Oberfläche mit einer geschlossenen Fuge zwischen den zwei Profilelementen..

Im folgenden wird die Erfindung anhand von Zeichnungen näher erläutert. Es zeigt
- Fig. 1: - das erfindungsgemäße Profilelement,
- Fig. 2a: - zwei Profilelemente vor der Verbindungsbildung,
- Fig. 2b: - zwei Profilelemente nach dem Ineinanderlegen,
- Fig. 2c: - die feste Profilverbindung nach dem Zusammenpressen.

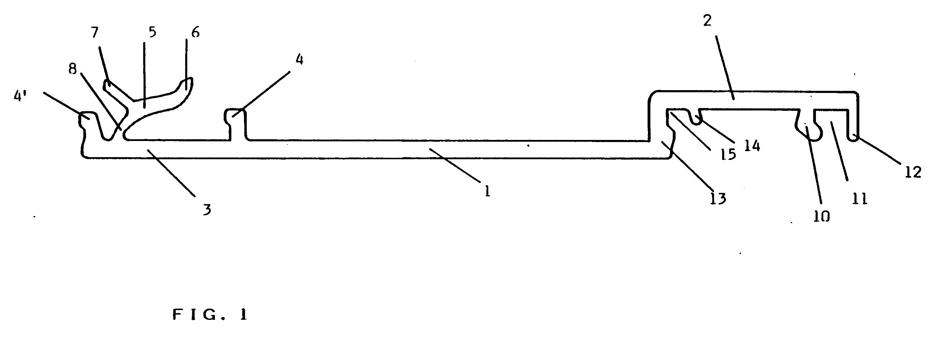

Das aus Fig. 1 ersichtliche leistenförmige Profilelement 1 besitzt unterschiedliche Längsränder 2 und 3, welche ineinandergefügt zusammenwirken. Wesentlicher Bestandteil des Längsrandes 3 ist das Hakensystem, bestehend aus zwei Hakenleisten 4 und 4'. Das Klemmelement 5 hat etwa die Form eines V, wobei dessen einer Steg 6 dicker als der andere Steg 7 gehalten ist. Mit seinem Scheitel ist das Klemmelement über die Dünnstelle 8 in Schräglage zwischen den Haken 4 und 4' außermittig an das Profilelement angeformt. Das Klemmelement 5 überragt in Ausgangslage die beiderseits angeordneten Hakenleisten 4 und 4'.

Der Längsrand 2 des Profilelementes 1 besitzt ein passendes Hakensystem ohne Klemmelement und ist am Ende innenseitig zu einer Stegleiste 12 abgewinkelt. Die Stegleiste 12 gewährleistet einen dekorativen Abschluß auf der Rückseite der Profilverbindung, für eine feste Verbindungsbildung ist sie nicht notwendig. Der Längsrand 2 ist »m das Maß der Hakenleisten 4 und 4' abgekröpft. Dadurch wird gewährleistet, daß bei Eingreifen der Hakenleisten 4, 4' des Längsrandes 3 in die Nuten 11 und 15 des Längsrandes 2 eine durchgehend glatte und bündige Oberfläche entsteht. Die Nuten 11 und 15 des Längsrandes 2 werden gebildet einerseits durch die Rastleiste 13 und den Anschlagwulst 14 und andererseits durch die Hakenleiste 10 und Stegleiste 12.

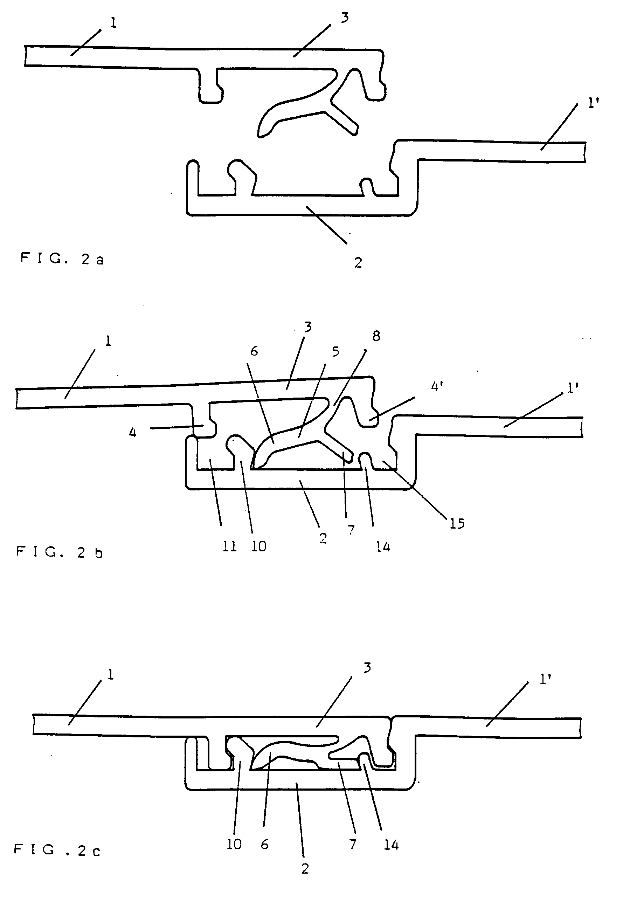

Die Fig. 2a zeigt die Längsrandbereiche 2 und 3 zweier für ihre Verbindungslage vorbereiteten Profilelemente 1 und 1'. Aus der Fig. 2b sind die Längsrandbereiche 2 und 3 zweier Profilelemente 1 und 1' vor dem Rollvorgang ersichtlich. Es wird deutlich, daß das Klemmelement 5 des Profilelementes 1 mit seinen Stegen 6 und 7 an der Innenseite des Längsrandes 2 des Gegenprofiles 1' zwischen der Anschlagwulst 14 und Hakenleiste 10 angesetzt wird. Beim Verformen, z. B. durch Rollen, werden die Hakenleisten 4 und 4' in die Nuten 11 und 15 gedrückt. Die Sicherung des Verbundes erfolgt durch das Klemmelement 5, dessen Dünnstelle 8 sich zunächst verformt, wobei der Steg 6 infolge seiner dickeren Ausführung die Hakenleiste 10 hintergreift, während der dünnere Steg 7 unter dem anhaltenden Verformungsdruck gegen den Anschlagwulst 14 gepreßt und dort verklemmt wird, wie aus Fig. 2c ersichtlich ist.

Da die Verformungskraft, die beim Zusammenpressen auf das Klemmelement 5 übertragen wird, durch die Schräglage des Klemmelementes 5 von ihrer senkrechten Einwirkungsrichtung auf das Profil in eine Querrichtung umgelenkt wird, kann es auf der glatten Oberfläche zu keiner Durchbiegung kommen.

### BEZUGSZEICHENLISTE

- 1, 1': Profilelement
- 2, 3: Längsrand
- 4, 4': Hakenleiste
- 5: Klemmelement
- 6: dicker Steg
- 7: dünner Steg
- 8: Dünnstelle
- 9: Basis des Profilelementes
- 10: Hakenleiste
- 11: Nut
- 12: Stegleiste
- 13: Rastleiste
- 14: Anschlagwulst
- 15: Nut

## Patentansprüche

1. Leistenförmiges Profilelement aus Metall, insbesondere aus Aluminium oder einer Aluminiumlegierung, das an seinem einen Längsrand ein Verbindungselement und an seinem anderen Längsrand ein entsprechendes Matrizenteil aufweist, die dem Zusammenfügen mehrerer Profilelemente zu flächigen Gegenständen dienen, wobei der das Verbindungselement aufweisende Längsrand (3) besteht aus zwei Hakenleisten (4, 4') und einem Klemmelement (5), das die Form eines V aufweist, dessen einer Steg (6) dicker als der andere Steg (7) ist und dessen Scheitel über eine Dünnstelle (8) außermittig in der Nut zwischen den Hakenleisten (4, 4') angeformt ist ,
und der das entsprechende Matrizenteil aufweisende Längsrand (2) besteht aus einer ersten Nut (15), gebildet durch eine Rastleiste (13) und einen Anschlagwulst (14) und aus einer zweiten Nut (11), gebildet durch eine Hakenleiste (10) und eine Stegleiste (11).

2. Profilverbindung zwischen zwei an ihren Längsrändern miteinander verbundenen, gleichgestalteten, leistenförmigen Profilelementen (1, 1') gemäß Anspruch 1, wobei das am einen Längsrand (3) ausgebildete Verbindungselement aus zwei gleichen, senkrecht zur Profilelementebene angeordneten, nach außen gerichteten Hakenleisten (4, 4'), die eine Nut bilden und aus einem Klemmelement (5), das die Form eines V aufweist, dessen einer Steg (6) dicker als der andere Steg (7) ist und dessen Scheitel über eine Dünnstelle (8) außermittig in der Nut zwischen den Hakenleisten (4, 4') angeformt ist, besteht und das am anderen Längsrand (2) ausgebildete, um die Höhe der Hakenleisten (4, 4') versetzt angeordnete Matrizenteil aus einer Rastleiste (13), einem Anschlagwulst (14), einer Hakenleiste (10) und einer Stegleiste (12) besteht, die in dieser Reihenfolge von innen nach außen nebeneinander und im wesentlichen senkrecht zur Profilelementebene angeordnet sind, wobei die Hakenleiste (4') in die durch die Rastleiste (13) und den Anschlagwulst (14) gebildete erste Nut (15) eingreift und gegen die Rastleiste (13) anliegt, die Hakenleiste (4) in die durch die Hakenleiste (10) und die Stegleiste (12) gebildete zweite Nut (11) eingreift und gegen die Hakenleiste (10) anliegt, das Klemmelement (5) durch Spreizen der Stege (6,7) in einer durch den Anschlagwulst (14) und die Hakenleiste (10) gebildeten Aufnahme die Verbindung sichert indem der dickere Steg (6) an der Hakenleiste (10) und der andere Steg (7) an dem Anschlagwulst (14) anliegen.

3. Profilverbindung nach Anspruch 2, dadurch gekennzeichnet, daß das in seiner Ausgangslage die Hakenleisten (4, 4') vorzugsweise um das Doppelte überragende Klemmelement (5) zum Herstellen der Verbindung zuerst in die durch den Anschlagwulst (14) und die Hakenleiste (10) gebildete Aufnahme eingreift.

4. Profilverbindung nach Anspruch 2 und 3, gekennzeichnet dadurch, daß nach Zusammenpressen der Profilelemente (1, 1') die Dünnstelle (8) und der Steg (7) durch Spreizung kraft- und formschlüssig mit dem Gegenprofil verbunden sind.

## Claims

1. A strip shaped metal profile element, made especially from aluminium or an aluminum alloy, containing a connecting element on one longitudinal edge and a respective accommodating element on the other for joining several profile elements to a level surfaced object, in which the longitudinal edge (3) containing the connecting element includes two hook strips (4,4') and a V-shaped clamping element (5) with one web (6) thicker than the other web (7) and an off-centre apex above a thin area (8), in the groove between the hook strips (4, 4') and the longitudinal edge (2), containing the respective accommodating element, consisting of a first groove (15), formed by a holding strip (13) and a stop bead (14) and a second groove (11), formed by a hook strip (10) and a web strip (11).

2. A profile connection between two profile elements (1, 1') according to claim 1, connected at their longitudinal edges, and being identically formed strips, in which the connecting element formed on one of the longitudinal edges (3) includes two outward facing identical hook strips (4, 4') arranged vertical to the profile element plane, forming a groove and a V-shaped clamping element (5) with one web (6) thicker than the other web (7) and an off-centre apex above a thin area (8), in the groove between the hook strips (4, 4'), and the accommodating element formed on the other longitudinal edge (2) and being offset by the height of the hook strips (4, 4'), including a holding strip (13), a stop bead (14), a hook strip (10) and a web strip (12), being arranged in this sequence next to one another, starting from the inside, and mainly vertical to the profile element plane, the hook strip (4') engaging into the first groove (15) formed by the holding strip (13) and the stop bead (14) and being arranged flush against the holding strip (13), the hook strip (4) engaging into the second groove (11) formed by the hook strip (10) and the web strip (12) and being arranged flush against the hook strip (10), the clamping element (5) securing the connection in a receiving part formed by the stop bead (14) and the hook strip (10) by expanding the webs (6,7), the thicker web (6) being arranged against the hook strip (10) and the other web (7) against the stop bead (14).

3. A profile connection according to claim 2, **characterised** in that the clamping element (5), being preferably twice as wide as the hook strips (4, 4') in its base position, forms the connection by first engaging into the reception part formed by the stop bead (14) and the hook strip (10).

4. A profile connection according to claims 2 and 3, **characterised** in that the thin area (8) and the web (7) are connected non-positively and positively with the counter profile when squeezing the profile elements (1, 1').

## Revendications

1. Élément profilé en forme de listel, en métal, notamment en aluminium ou alliage d'aluminium, présentant sur un bord longitudinal un élément de jonction et sur l'autre bord longitudinal une pièce de matrice correspondante, qui servent à l'assemblage de plusieurs éléments profilés pour former des objets plans, le bord longitudinal (3) portant l'élément de jonction étant composé de deux listels à crochet (4, 4') et d'un élément de serrage (5) présentant la forme d'un V dont une branche (6) est plus épaisse que l'autre branche (7) et dont la pointe est rattachée par un élément fin (8) de façon excentrique dans la rainure entre les deux listels à crochet (4, 4') et le bord longitudinal (2) portant la partie de matrice correspondante étant composé d'une première rainure (15) formée par un listel à cran (13) et une butée renforcée (14) et d'une seconde rainure (11) formée par un listel à crochet (10) et un listel à nervure (11).

2. Jonction par profilé entre deux éléments profilés (1, 1') en forme de listel, de forme identique, joints entre eux sur leurs bords longitudinaux selon la spécification 1, l'élément de jonction d'un bord longitudinal (3) étant composé de deux listels à crochet (4, 4') dirigés vers l'extérieur, qui constituent une rainure et d'un élément de serrage (5) présentant la forme d'un V dont une branche (6) est plus épaisse que l'autre branche (7) et dont la pointe est rattachée par un élément fin (8) de façon excentrique dans la rainure entre les deux listels à crochet (4, 4') et la partie de matrice correspondante fixée sur l'autre bord longitudinal (2) et décalée de la hauteur des listels à crochet (4, 4') étant composée d'un listel à cran (13), d'une butée renforcée (14), d'un listel à crochet (10) et d'un listel à nervure (12), qui sont disposés l'un près de l'autre dans cet ordre de l'intérieur vers l'extérieur et essentiellement verticalement par rapport au plan de l'élément profilé, le listel à crochet (4') s'enclenchant dans la première rainure (15) formée par le listel à cran (13) et la butée renforcée (14) et portant contre le listel à cran (13), le listel à crochet (4) s'enclenchant dans la deuxième rainure (11) formée par le listel à crochet (10) et le listel à nervure (12) et portant contre le listel à crochet (10), l'élément de serrage (5) assurant la jonction par écartement des branches (6, 7) dans un logement formé par la butée renforcée (14) et le listel à crochet (10), la branche plus épaisse (6) portant sur le listel à crochet (10) et l'autre branche (7) portant sur la butée renforcée (14).

3. Jonction par profilé selon la spécification 2, **caractérisée par le fait** que l'élément de serrage (5) qui, dans sa position initiale dépasse du double les listels à crochet (4, 4'), s'enclenche d'abord dans le logement formé par la butée renforcée (14) et le listel à crochet (10) pour assurer la jonction.

4. Jonction par profilé selon les spécifications 2 et 3, **caractérisée par le fait** qu'après le pressage des éléments profilés (1, 1') l'un contre l'autre, l'élément fin (8) et la branche (7) s'écartent et sont joints par engagement positif et par force avec le contre-profil.
